# EUROPEAN PATENT APPLICATION

(11) **EP 1 770 537 A2**
(43) Date of publication of application: **04.04.2007**
(21) Application number: 05765796.7
(22) Date of filing: 12.07.2005
(51) Int. Cl.: G06F 13/00

(54) **INFORMATION PROCESSING DEVICE AND INFORMATION PROCESSING METHOD**

(30) Priority: 13.07.2004 JP 2004205552; 19.08.2004 JP 2004239101
(71) Applicant: MITSUBISHI DENKI KABUSHIKI KAISHA, Tokyo 100-8310 (JP)
(72) Inventor: YANO, Hirotoshi MITSUBISHI DENKI K.K., Tokyo, 1008310 (JP); MOCHIZUKI, Shouji MITSUBISHI DENKI K.K., Tokyo, 1008310 (JP); HIRANO, Makoto MITSUBISHI DENKI K.K., Tokyo, 1008310 (JP); SATO, Dai MITSUBISHI DENKI K.K., Tokyo, 1008310 (JP)
(74) Representative: Poulin, Gérard
(86) International application number: PCT/JP2005/012795
(87) International publication number: WO 2006/006576

(57) **Abstract**

In the conventional network, in order to conduct remote control upon electric devices through the Internet, it is necessary to specially provide a centralized controller and a terminal. An information processor of the present invention comprises: an information obtaining means for obtaining information such as information of an image, provided in an adapter body and operated by an operation signal sent from the outside; a signal sending and receiving means for sending a signal of the information obtained by the information obtaining means and receiving an operation signal sent from the outside, arranged in the adapter body; a control section for accommodating a plurality of protocols and converting various signals so that an operation signal and an information signal, which are sent from and received by the signal sending and receiving means, can be processed corresponding to various communication systems such as a cable communication system or a wireless communication system; and a support device for fixing and supporting the adapter body, wherein a position of an information obtaining section for obtaining information of the information obtaining means can be set.

## Description

### TECHNICAL FIELD

The present invention relates to an information processing technique capable of conducting telecommunication and obtaining information for operating a device such as a camera to obtain image information or operating a device to obtain information from the outside.

### BACKGROUND ART

In order to conduct remote control upon electric appliances and sensors, terminals and access points, which are exclusively used for the electric appliances, are arranged in the devices, which are connected to the outside network, such an access point and a rooter. Therefore, users must purchase electric appliances capable of being applied to the network. That is, in the electric appliances, it is necessary that a built-in type network module is connected to the access point (centralized controller or terminals), which is exclusively used for the electric appliances and it is also necessary that a network camera, which is specially provided, must be supplied with electric power, that is, it is necessary to provide a power supply feeder for the network camera.

There is provided an air conditioner having a port into which a network module can be inserted so that this air conditioner can be applied to several communication systems by replacing the network module. However, in this structure, it is necessary to provide a control driver body and a port, which is exclusively used for the network module, in the main body. Concerning this technique, refer to Patent Document 1.
A camera unit technique is well known in which electric power is supplied to a camera and signals are sent to and received from the camera by the serial connection such as USB (Universal Serial Bus) and the camera is tilted in the lateral and the vertical direction. In this case, it is necessary that the camera is arranged at a position from which the entire room can be seen and the wiring is laid to the camera. Concerning this technique, refer to Patent Document 2.

Patent Document 1: Official gazette of JP-A-2003-083591 (Fig. 1 and Column 0011 etc)
Patent Document 2: Official gazette of JP-A-2002-131806 (Figs. 4 and 6 etc)

### DISCLOSURE OF THE INVENTION

### PROBLEMS THAT THE INVENTION IS TO SOLVE

Conventionally, it is necessary that a network driver and a communication device are incorporated into an electric device such as an electric appliance itself or a personal computer. Therefore, a user who does not use the home network can not find any added value in the electric device. When the electric device is connected to the outside network and remotely controlled, it is necessary to specially provide a centralized controller and a terminal and the initial cost is raised. In this case, it is impossible to cope with a change in the communication system and S/W. Therefore, when times have changed, it is necessary for a user to purchase a new device. Further, even in the case of a wireless LAN type network camera, it is necessary to provide an electric power feeder line. In the case where the network camera is arranged at a high position, it is necessary to lay an electric power feeder line at the high position, that is, a large number of problems may be encountered in this case. Further, the following problems may be encountered. Since the electric power feeder line and the communication line are needed in this case, even it is a home or a wide public facility, the number of cameras and sensors to be arranged is limited.

The present invention has been accomplished to solve the above problems. It is an object of the present invention to reduce the initial cost for connecting an electrical device to the network and conducting telecommunication. Further, it is another object of the present invention to provide a handy and highly reliable information processor.

### MEANS FOR SOLVING THE PROBLEM

The information processor of the present invention includes: an information obtaining means for obtaining information such as information of an image, provided in an adapter body and operated by an operation signal sent from the outside; a signal sending and receiving means for sending a signal of the information obtained by the information obtaining means and receiving an operation signal sent from the outside, arranged in the adapter body; a control section for accommodating a plurality of protocols and converting various signals so that an operation signal and an information signal, which are sent from and received by the signal sending and receiving means, can be processed corresponding to various communication systems such as a cable communication system or a wireless communication system; and a support device for fixing and supporting the adapter body, wherein a position of an information obtaining section for obtaining information of the information obtaining means can be set.

This information processor of the present invention includes: a housing, on one face of which an information obtaining section of the information obtaining means, which is operated by an operation signal sent from the outside and obtains information such as an image, is provided; and a sending and receiving means for sending an obtained information signal to the outside or receiving an operation signal sent from the outside, provided in the housing, the sending and receiving means being capable of coping with various communication system such as a cable communication system and a wireless communication system, wherein at least one portion of the housing is formed into a flat shape, a circular shape or a spherical shape, and a support face of the housing is provided on the flat face, the shape of which is flat, the circular face, the shape of which is circular, or a spherical shape, the shape of which is spherical.

The information processing method of the present invention includes: a network forming step of forming a network of communication by providing a plurality of information processors including a signal sending and receiving means for obtaining an operation signal from the outside and sending information, which is operated by the operation signal, to the outside, provided in the adapter body, also including a control section for accommodating a protocol capable of processing an operation signal and an information signal corresponding to a cable communication system or a wireless communication system, in which the signal is sent and received by the signal sending and receiving means, and for converting the signal, and also including a device communication section controlling section controlling section, which is arranged in the control section, for controlling an electrical device being operated by an operation signal sent from the outside; a classification step for classifying an electrical device, which is controlled by a plurality of adapter bodies, into a plurality of stages according to the necessity of supplying electric power; and a switching system, which is conducted through the adapter bodies for controlling the classified electric device, of turning on and off the supply of electric power to an adapter body for controlling an electric device, which does not need a continuous electrification, or turning on and off the supply of electric power to an adapter body for controlling an electric power supply unit to supply electric power to the electric device.

### ADVANTAGE OF THE INVENTION

The information processor of the present invention can provide the following effects. An adapter body, in which an information obtaining means such as a camera is provided, is made to correspond to various communication systems, so that the cost charged by using the home network can be reduced at the minimum. Further, this information processor can be applied to any communication system. Furthermore, this information processor is simple and handy. According to this invention, it is possible to provide a device and method by which energy used for electric devices can be reduced.
Therefore, the present invention can greatly contribute to the global environment protection.

### BRIEF DESCRIPTION OF THE DRAWINGS

[Fig. 1] A schematic illustration showing an entire network structure in which the information processor of Embodiment 1 of the present invention is used.
[Fig. 2] A block diagram for explaining a communication structure of the information processor of Embodiment 1 of the present invention.
[Fig. 3] A perspective view for explaining a structure of the information processor of Embodiment 1 of the present invention.
[Fig. 4] A front view for explaining a structure of the information processor of Embodiment 1 of the present invention.
[Fig. 5] A side view for explaining a structure of the information processor of Embodiment 1 of the present invention.
[Fig. 6] A schematic illustration showing a state in which a camera of the information processor of Embodiment 1 of the present invention is directed downward.
[Fig. 7] A side view showing a state in which the information processor of Embodiment 1 of the present invention is attached to a wall fixture.
[Fig. 8] An upper face view for explaining a structure of the information processor of Embodiment 1 of the present invention.
[Fig. 9] A side view showing a state in which the wall fixture of the information processor of Embodiment 1 of the present invention is used as a floor table.
[Fig. 10] An exploded perspective view showing a structure of another information processor of Embodiment 1 of the present invention.
[Fig. 11] An upper face view showing another information processor of Embodiment 1 of the present invention.
[Fig. 12] A side view showing a state in which another information processor of Embodiment 1 of the present invention is attached to a wall fixture.
[Fig. 13] A front view showing another information processor of Embodiment 1 of the present invention.
[Fig. 14] A side view briefly showing an adapter board when another information processor of Embodiment 1 of the present invention is attached to the wall fixture under the condition that a case is opened.
[Fig. 15] A sectional side view showing a body support portion when another information processor of Embodiment 1 of the present invention is attached to the wall fixture.
[Fig. 16] A partially sectional upper face view of the body support portion when another information processor of Embodiment 1 of the present invention is attached to the wall fixture.
[Fig. 17] A sectional side view showing a body support portion when the wall fixture of another information processor of Embodiment 1 of the present invention is also used for setting the information processor on the floor.
[Fig. 18] A front view showing a wall fixture of another information processor of Embodiment 1 of the present invention, wherein the wall fixture is also used for setting the information processor on the floor.
[Fig. 19] A communication structure view for explaining a communication structure of the information processor of Embodiment 1 of the present invention.
[Fig. 20] A schematic illustration showing an entire network structure having a stand-by intercepting function in which the information processor of Embodiment 1 of the present invention is used.
[Fig. 21] A flow chart for explaining a network structure having the stand-by intercepting function in which the information processor of Embodiment 1 of the present invention is used.

### DESCRIPTION OF THE REFERENCE NUMERALS AND SIGNS

1 Adapter body, 2 Body case, 2a Connecting portion cover, 3 Lens for camera use, 4 Illumination used at night, 5 LED used for display, 6 Reset switch, 7 Body display section, 8 LAN card, 9 Adapter board, 9a IT terminal, 10 Body support table portion, 10a Attaching hole, 10b Upper bearing portion, 10c Lower bearing portion, 10d Fixing pawl rail portion, 10e Attaching portion used for floor, 10f Rear face of main body support table, 10g Through-hole for cable use, 11 Body attaching button, 12 Floor stand, 12a Pawl piece, 13 Wall fixture, 13a Support arm, 13b Upper shaft portion, 13c Lower shaft portion, 14 Fastening piece, 16 Power source connector, 20 Electric appliance communication device control section, 21 Storage device, 22 Camera control section, 23 Driver for communication use, 24 Protocol, 25 Cable LAN connector, 26 Antenna section, 27 Communication control section, 28 Interface I/F, 29 Camera module, 30 Control section, 32 Network module, 41 Electric appliance A, 43 Camera module, 44 Access point having rooter, 45 Electric appliance B, 47 Internet, 48 ASP (Application Service Provider), 49 Cellular phone terminal, 50 PC, 51 PDA (Personal Digital Assistance), 52 Access point, 53 Electric appliance C, 55 Gateway, 57 Another personal computer.

### BEST MODE FOR CARRYING OUT THE INVENTION

### EMBODIMENT 1

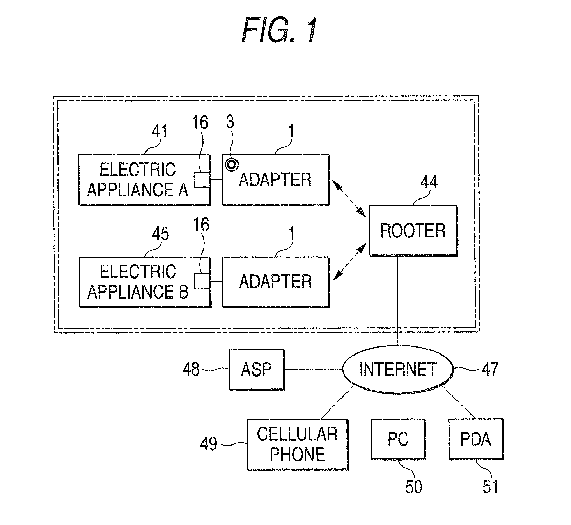

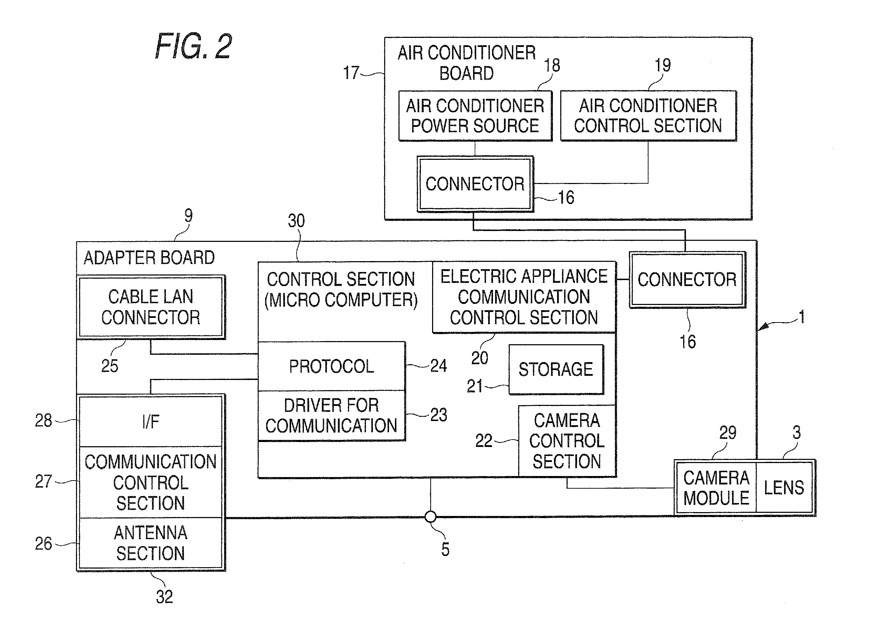

Referring to Figs. 1 and 2, a specific structure of the present invention will be explained below. Fig. 1 is a schematic illustration showing an entire network structure in which the information processor of Embodiment 1 of the present invention is used. The adapter 1 having a camera, which is an interface coping with wireless LAN easily attached and detached, is connected to the control unit of the electric appliance 41 which is the electric appliance A such as an air conditioner. In the adapter 1, which is an interface coping with wireless LAN, the camera control section 22 is provided. Therefore, signals can be exchanged by wireless communication with the access point 44 having a rooter which is connected to the outside by an existing telephone line or an optical fiber. In the same manner, the adapter 1 having a camera is connected to the microphone, which is an interface coping with wireless LAN, together with a board provided in the electrical component box of the electric device 45 which is the electric appliance B such as an air conditioner, a refrigerator or a personal computer. Therefore, wireless communication is conducted with the repeater 44. Outside the home, ASP (Application Service Provider) 48, the cellular phone terminal 49, PC50 and PDA 51 are connected to the Internet 47 which is the outside network connected to this repeater 44. In this connection, the electric appliances provided in the network of the present invention may be an electric appliance such as a television set or an illumination device, an air conditioning device such as a ventilation fan or a blower, a cooking device such as a microwave range, OA device such as a personal computer PC, FAX or a server, and factory facilities or transportation facilities. Alternatively, the electric appliances provided in the network of the present invention may be a combination of the above devices. The present invention can be applied not only to the home network but also to the network system provided in an office, a restaurant, a supermarket or a school.

Next, the specific structure of the adapter body 1, which is an information processor of the present invention, will be explained below. Fig. 2 is a block diagram for explaining the communication structure of the information processor of the present invention. In the electric component box provided in the electric appliance 41 which is an air conditioner interior device, the board 17 for controlling the air conditioner is provided. The electric power source 18 of the electric appliance 41 is laid from a plug socket arranged in a room to this board 17. Concerning the storage means and the calculation means provided in the microcomputer attached to this board 17, the air conditioner control section 19 is arranged which adjusts the temperature and the humidity at predetermined values when signals are received from sensors for detecting the operation and stoppage of the air conditioner, the room air temperature, the humidity and the state of refrigerant circulating in the refrigerating cycle of the air conditioner. The air conditioner power source 18 and the air conditioner control section 19 are connected to the connector 16, which is provided in the air conditioner interior device body, by the electric power line and the signal line. In this connection, in the case where the communication from the electric appliance is made by the electric power line conveyance system, only two electric power lines may be used for the wiring to be connected. Of course, two or more communication lines can be omitted.

The connector 16 of the adapter body 1, which is connected to the air conditioner 41 at least by the electric power lines, is directly connected to the connector of the air conditioner board 17. Therefore, the connector 16 of the adapter body 1 receives electric power from the air conditioner interior device and exchanges signals by two or more signal lines. On the adapter board 9 provided on the adapter body 1, the control section 30, which includes a microcomputer and ROM mounted on this board 9, is formed. This control section 30 conducts a signal conversion between different signal systems such as between electric appliance control signals and wireless communication signals. Further, this control section 30 includes: an electric appliance communication section control section 20 for controlling a communication section which receives a communication signal to conduct remote control upon the electric appliance 41 and transmits the communication signal to the air conditioner; and a storage device 21 which is a storage element for storing a communication signal sent from the outside and a data signal received from the air conditioner. Further, as an information obtaining means, which is attached to the adapter body 1, for obtaining information about the peripheral environment such as circumstances in the room, the network camera is provided which is composed of a lens 3 and a camera module 29 for generating an image signal from the image obtained through this lens 3. The control section 30 includes: a camera control section 22 for supplying electric power to these auxiliary devices and for converting the obtained image into a communication signal; a driver 23 used for communication which transmits a signal by means of wireless communication to the repeater 44 such as a rooter; and a protocol 24 for accommodating a communication protocol in various communication systems such as a wireless communication system and a cable communication system in the case where wireless LAN or cable LAN is provided.

This adapter board 9 includes: a light emitting element LED 5 for indicating that electric power is supplied and the control section 30 is operated and the camera is being operated by lighting the light emitting element LED 5; a connector 25 capable of being connected to cable LAN; and a network module 32 conducting wireless communication. This network module 32 includes: an antenna section 26 for conducting wireless communication with the repeater 44; a communication control section 27 for controlling sending and receiving a signal with the antenna; and an interface I/F 28 which is in charge of transmission with the control section 30. This network module 32 is of the card type. Therefore, only when this network module 32 is inserted, sending and receiving a signal can be conducted by the connection of I/F.

As an example of the information obtaining means shown in Fig. 2, the network camera for obtaining image information is explained above. However, the information obtaining means is not limited to the above specific example. For example, it is possible to provide a radiation temperature sensor for detecting a wall temperature, an infrared ray detector for detecting a human body, a smell sensor, a microphone for detecting sound pressure and a special sensor for detecting a specific chemical, a specific frequency sound, a ray of light of a specific wave-length or a specific color. It is possible arrange a sound device such as a microphone or a speaker instead of the lens 3. It is possible to arrange a voice module instead of the camera module 29 so that a validation can be made through the Internet for registering a speaker in the case where the electric appliance is controlled by a voice. It is possible to distribute music from the outside to the voice module.

A plurality of pieces of information of a plurality of sensors of the information obtaining means are simultaneously obtained and stored in the control section, and an average value and a value of deviation are collected and subjected to multivariate analysis and Mahalanobis' distance is calculated and the occurrence of an abnormality such as fire may be discriminated by a relation with the threshold value. Further, when a crowded state in a shop or a progress of cooking food in a kitchen or a state of production in a factory may be judged and outputted, so that processed information can be transmitted to a remote place by the wireless or the cable communication system.

Due to the foregoing, when the environment, in which various information processors are arranged, is judged, it becomes possible to take appropriate countermeasures any time and anywhere. In this connection, in the above explanations, data analysis is made in the information processor. However, when data transmitted and recorded by data-communication is analyzed by a personal computer connected to the network, it is possible to introduce various analysis method and make investigations into the data obtained in the past and reflect the result of the investigations on the threshold value. It is possible to combine a camera with a microphone or it is also possible to combine a camera 3, which is exclusively used for taking pictures at night, with an infrared ray irradiation device 4 so that information in the environment, in which the adapter body 1 is arranged, can be obtained. Alternatively, it is possible to collect necessary information from the outside by utilizing the communication. Alternatively, it is possible to send information from a speaker. Alternatively, it is possible to combine both of them.

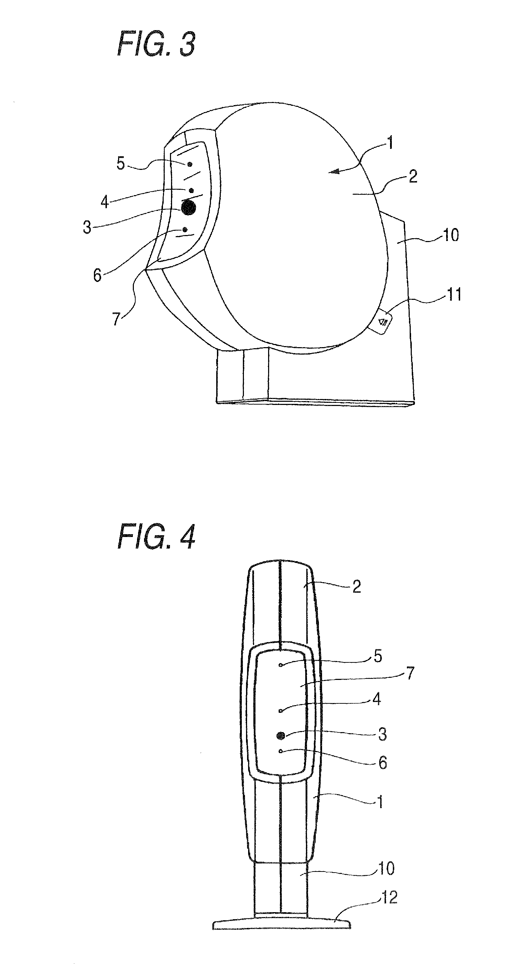

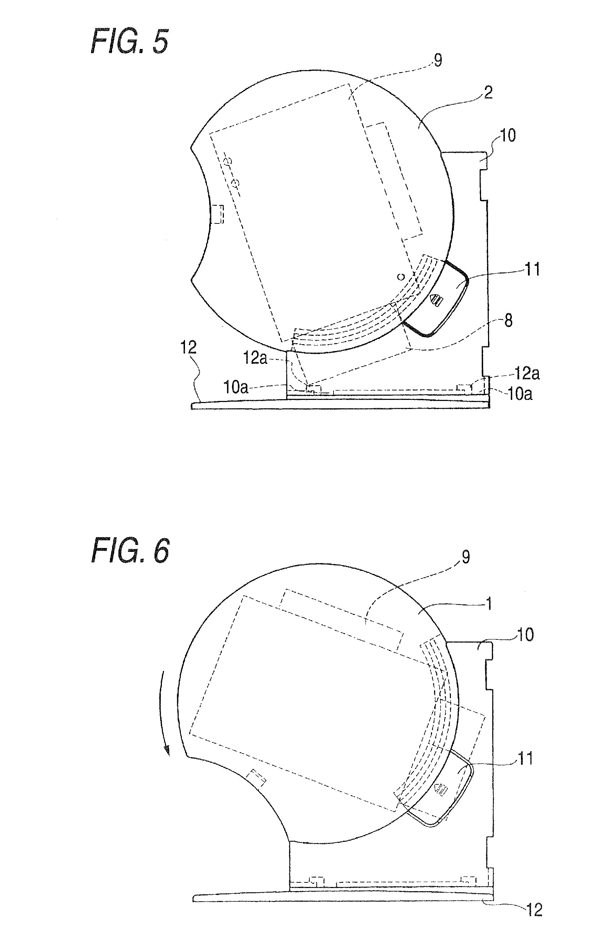

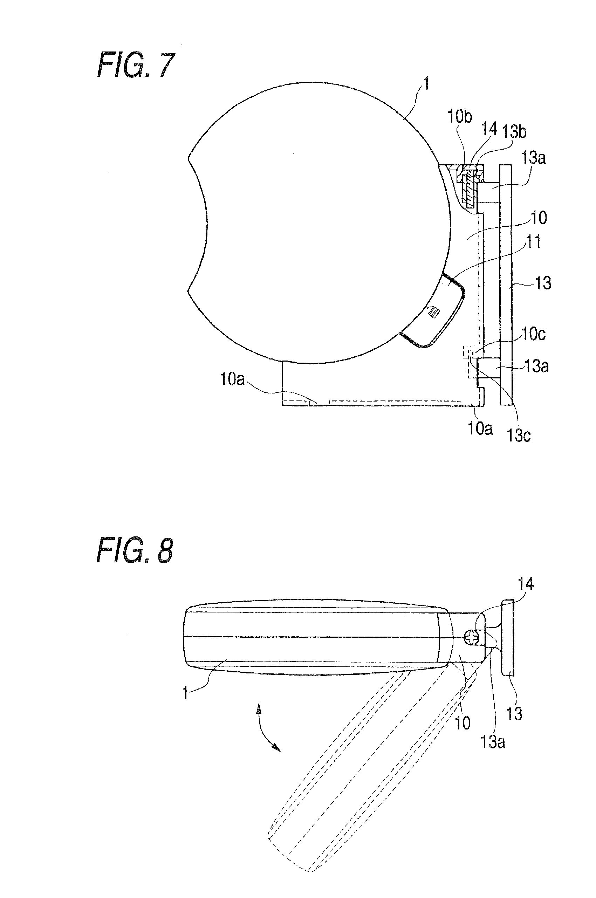

Next, as the information processor of the present invention, the specific structure of the adapter, on which a wireless LAN camera is mounted, will be explained below. Fig. 3 is a perspective view for explaining a structure in which an adapter, on which a wireless LAN camera is mounted, of the present invention is attached to a floor table. Fig. 4 is a front view for explaining a structure in which the adapter, on which the wireless LAN camera is mounted, of the present invention is attached to the floor table. Fig. 5 is a side view for explaining a structure in which the adapter, on which the wireless LAN camera is mounted, of the present invention is attached to the floor table. Fig. 6 is a perspective view for explaining a state in which the adapter, on which the wireless LAN camera is mounted, of the present invention is attached to the floor table and the camera is directed downward. Fig. 7 is a side view for explaining a structure in which the adapter, on which the wireless LAN camera is mounted, of the present invention is attached to a wall fixture. Fig. 8 is an upper face view for explaining a structure in which the adapter, on which the wireless LAN camera is mounted, of the present invention is attached to the wall fixture.

As shown in Figs. 3, 4 and 5, the adapter body 1 includes : a body case 2 divided into two pieces in the lateral direction; a camera lens 3; an illumination 4 for illuminating a doubtful person at night; and a body display section 7 composed of a light emitting diode LED 5 for displaying a state of electric power supply and for displaying a state of communication and also composed of a switch 6. The adapter body 1 further includes inside an adapter board 9 having LAN card 8 which is directly connected to an air conditioner (not shown) by wiring so that it can receive electric power from an air conditioner interior device (not shown) and exchange a signal. The adapter body 1 is supported by a body support portion 10 which movably supports the body according to the setting condition. The adapter body 1 can be freely attached to and detached from this body support portion 10 by the body detaching button 11 provided in the body support portion 10. The housing of the adapter body 1 is composed of a thin circular flat body case 2 into which the adapter board 9 and the camera module 29 are incorporated. In one portion of the outer circumferential circular face which is the flat face of this housing, the body display section 7, to which the camera lens 3 of the information obtaining section is attached, is provided.

In the drawing, a portion of the circular face on the outer circumference is formed into a recessed display section 7. However, on the circular outer circumferential face itself, the display section may be provided. Alternatively, the display section or the information obtaining section may be further protruded from the outer circumference. In the case where one or a plurality of large capacity speakers are provided, it is preferable that the body case 2 is formed into a spherical shape such as an egg shape because the large capacity speakers can be easily accommodated in the housing. When the lens, the microphone and the sensors, which are the information obtaining means, and the illumination device and the light irradiating device are provided on the outer circumferential circular face, which is the flat face of the housing, or on the spherical face as described above, the devices and the board accommodated in the housing can be simply arranged.

In Fig. 3, the body case 2 is supported so that it can be rotated while sliding along the circular face which is a support face of the body support portion 10, that is, the body case 2 is pivotally supported. In this case, the detaching button 11 fixed to the body support portion 10 is pivotally attached into a long hole formed along the circular shape of the case 2 being prevented from coming out from the hole. A spring is built in this detaching button 11. Therefore, when this button is pushed so that the spring force can be released, the case 2 can be manually rotated. Due to this spring structure, the lens and others can be stably fixed at the setting position. When the case 2 is rotated to a specific position, the case 2 can be simply disconnected from this detaching button 11. In the structure shown in Fig. 3, both the body support portion 10 and the adapter body 1, which is supported by the body support portion 10, are provided with a circular sliding portion so that the adapter body can be rotated on the body support portion which is fixed. Therefore, as shown in Fig. 6, the direction and the position of the camera lens 3 can be changed in the vertical direction with respect to the rotary center. Therefore, it is possible to take pictures of different images. In this connection, the adapter body 1 can be manually rotated in this way. Alternatively, the adapter body 1 can be automatically rotated in this way by the remote control of a motor built in the body support portion 10. When the case 2, which is the housing, is formed into a spherical shape or when an attaching face of the case 2 to the body support portion is formed into a spherical shape, the housing can be moved in the vertical and the lateral direction on the body support portion 10 so that the lens direction can be freely changed. As described above, when the information obtaining means is divided into the adapter body 1 and the support device on which the adapter is mount and fixed and these adapter body 1 and support device are moved so that they can be positioned, the directions of the lens and the light irradiating device can be freely set and changed.

In the adapter body 1 shown in Figs. 4 and 5, for example, it is assumed that the adapter is used being put on the floor, the attaching holes 10a, into which the pawl pieces 12a of the floor table 12 are attached, are provided. Further, it is assumed that the adapter is directly fixed to a front surface or a side of an air conditioner (not shown) or the adapter is attached onto a wall face located at a high position, the upper bearing portion 10b and the lower bearing portion 10c are arranged on the rear upper side and the rear lower side of the body support portion 10. The wall fixture 13 is composed as follows. A pair of support arms 13a corresponding to the upper and the lower bearing portion 10b, 10c of the body support 10 are provided. At the forward end of the upper support arm, the upper bearing portion 13b for pivotally supporting the upper bearing portion 10b is provided, and at the forward end of the lower support arm, the lower bearing portion 13c for pivotally supporting the lower bearing portion 10c is provided. The body support portion 10 and the wall fixture 12 are fixed to each other in such a manner that the upper shaft 13b inserted into the upper bearing portion 10b is prevented from being disconnected by attaching the fastening piece 14 from the upper bearing portion 10b side.

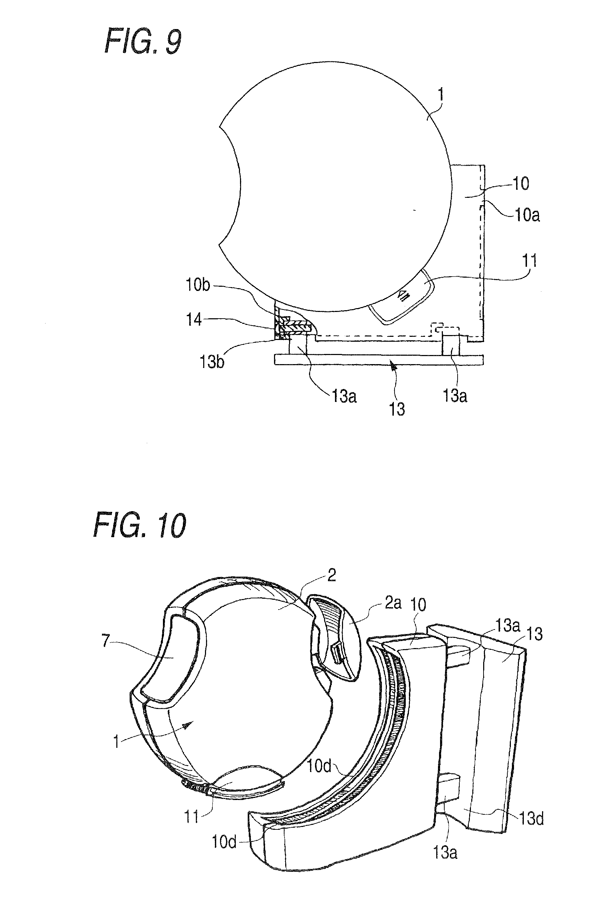

In this connection, concerning this wall fixture 12, as shown in Fig. 9, the adapter body 1 including the body fixing table 10 is once detached from the state in which the wall fixture 12 is attached, and the wall fixture 12 may be used being located on a lower face of the adapter body 1 while the wall fixture 12 is being used as a floor table. As shown in Figs. 5 and 6, a portion of the board accommodated and fixed in the case 2 is protruded from an open portion at the rear of the case 2 into an inner space of the body support portion 10. Therefore, the portion of the board is moved according to a movement of the case 2 in the inner space of the body support portion 10. Accordingly, the wire to connect the board 9 with the power source is accommodated in the inner space of the body support portion 10, that is, the connection with the power source is flexibly moved, so that the degree of freedom of setting the information processor can be enhanced.

On the adapter board 9, the control section 30 is formed which is composed of a microcomputer attached onto this adapter board 9. This control section 30 includes: an electric appliance communication device control section 20 for receiving a communication signal for remotely controlling an electric appliance (not shown) from the outside and transmitting it to an air conditioner; a storage device 21, which is a storage element, for storing a communication signal sent from the outside and storing a data signal received from the air conditioner; a camera control section 22 for controlling the supply of electric power to the network camera composing the camera module 29 to generate an image signal from an image obtained through the camera lens 3 and for converting the obtained image into a communication signal; a driver 23 for communication for transmitting a signal to a repeater (not shown) by wireless; and a protocol 24 for accommodating a communication protocol in various communication forms such as a wireless communication form or a cable communication form in the case where cable LAN is provided. The adapter board 9 includes: the above LED 5 used for displaying the supply of electric power; a connector 25 capable of being connected to cable LAN; and a network module 32 to conduct communication by wireless.

The network module 32 includes: a communication control section 27; an interface I/F 28 for converting a communication signal between different signal systems, for example, between the electric appliance control signal system and the wireless communication signal system; and an antenna section 26 for conducting wireless communication with a repeater (not shown).

Operation of the adapter having a camera for wireless LAN of the present invention will be explained in two cases, wherein one is a case in which the adapter is set on the floor and the other is a case in which the adapter is fixed onto the wall. First, in the case where the adapter is set on the floor, it is possible to slide the adapter body 1 on the body support table 10 from the state shown in Fig. 5 to the state shown in Fig. 6, that is, it is possible to slide the adapter body 1 on the body support table 10 from the state in which the camera lens 3 is directed to the front to the state in which the camera lens 3 is directed downward by the angle of about 30° when the adapter body 1 is manually slid on the body support table 10. In this case, the following advantages can be provided. When the electric appliance is installed, a position at which the adapter having a camera is set can be freely determined according to the position at which the electric appliance which sends a signal is arranged so that information about the state in the room can be obtained.

Next, the case in which the adapter is fixed onto a wall will be explained below. As shown in Figs. 7 and 8, when the wall fixture 13 is attached and fixed onto a side of the electric appliance (not shown) such as an air conditioner, a refrigerator, an electron range, DVD video recorder or an audio device, the body support table 10, which is pivotally supported by the wall fixture 13, can be manually moved to the right and left according to the preference of a user, that is, the adapter 1 can be swung by the angle of about 50°. Further, the adapter body 1 can be slid downward on the body support table 10 by the angle of about 30°. Therefore, it is possible to provide an effect that the adapter 1 having a camera is attached at a desired position in a room so that a state in the room can be widely monitored.

According to the structure of the information processor of the present invention, the front face of the adapter body 1, on which the display section 7 is provided, can be freely changed by utilizing the body support table 10 and the wall fixture 13 for fixing the device onto a wall. Therefore, the adapter body 1 may be stuck on an upper face of the electric appliance 41. Alternatively, the adapter body 1 may be fixed to a wall face or a roof which is distant from a user. In the case of a portable electric appliance such as a personal computer, the adapter body 1 may be put beside the electric appliance so that the adapter body 1 can be opposed to an operator. In this case, an unnecessary function, for example, an illumination is turned off by selecting the switch 6.

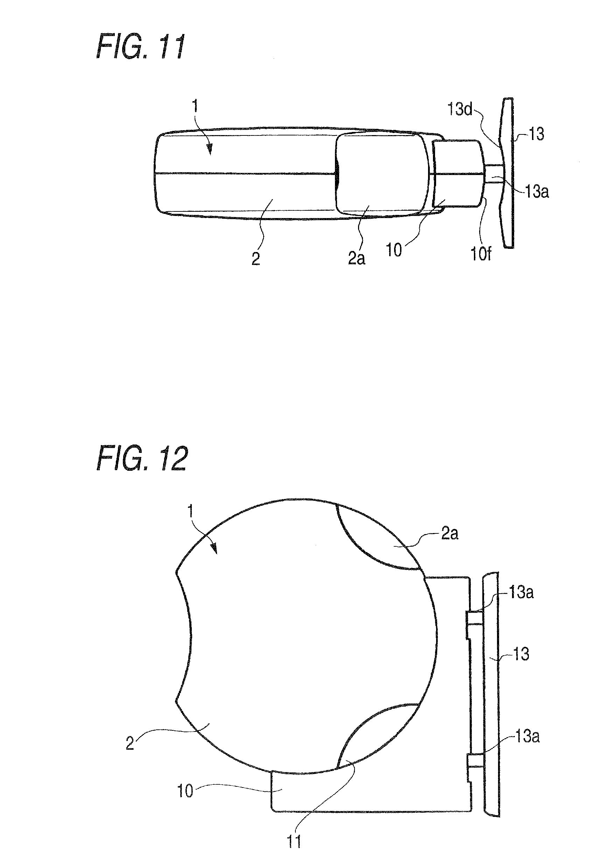

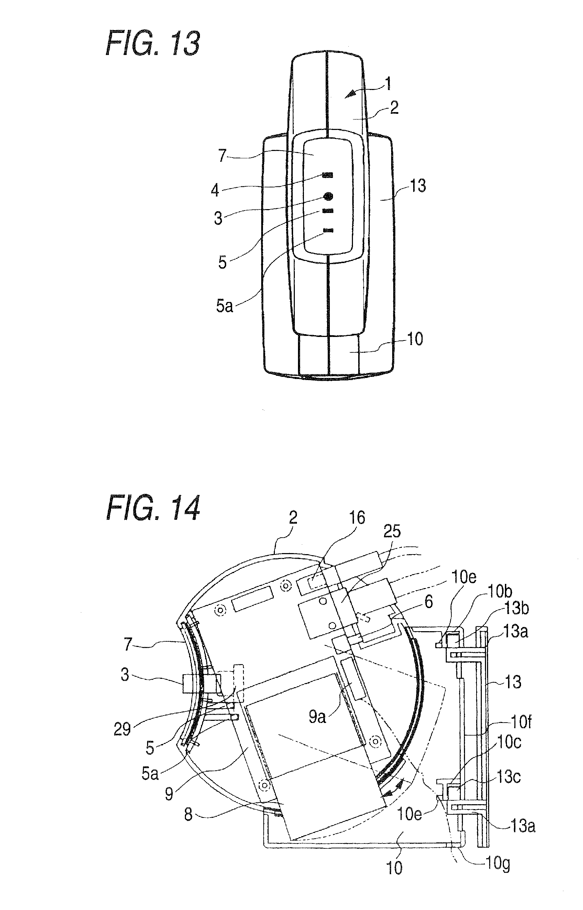

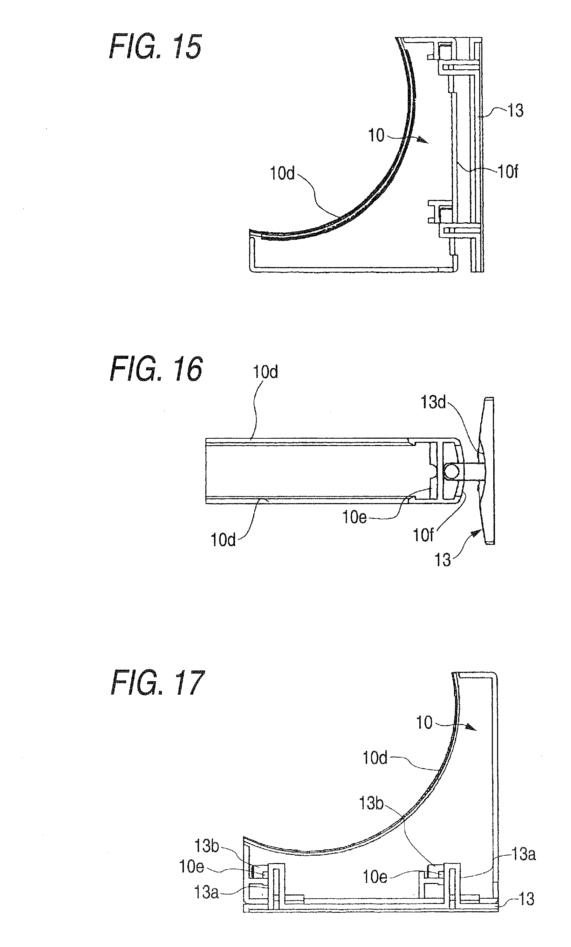

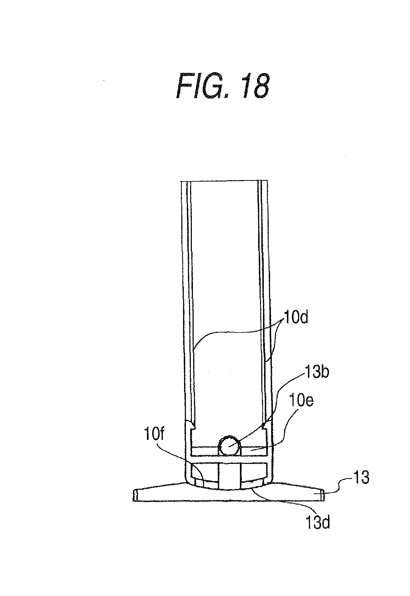

Referring to Figs. 10 to 17, the adapter body 1 will be explained in more detail. Fig. 10 is an exploded perspective view showing a structure of another information processor having another adapter body structure of the present invention. Fig. 11 is a plan view showing another information processor of the present invention. Fig. 12 is a side view showing a state in which another information processor of the present invention is attached to a wall fixture. Fig. 13 is a front view showing another information processor of the present invention. Fig. 14 is a side view briefly showing an adapter board when an information processor of the present invention is attached to a wall fixture under the condition that a case is opened. Fig. 15 is a sectional side view showing a body support portion when another information processor of the present invention is attached to the wall fixture. Fig. 16 is a partially sectional plan view of the body support portion when another information processor of the present invention is attached to the wall fixture. Fig. 17 is a sectional side view showing a body support portion when the wall fixture of another information processor of the present invention is also used for setting the information processor on the floor. Fig. 18 is a plan view showing a wall fixture of another information processor of the present invention, wherein the wall fixture is also used for setting the information processor on the floor.

In the information processor shown in Figs. 10 to 13, for example, the adapter body 1 has the same structure as that of the adapter body shown in Figs. 2 and 7. Like reference characters are used to indicate like parts in Figs. 2, 7 and 10 to 13, and the structure and the function of the adapter body shown in Figs. 10 to 13 are the same as those of the adapter body shown in Figs. 2 and 7. The adapter body includes: a body case 2 which is divided into two pieces of the right and the left; a connecting portion cover 2a for covering a connecting portion to connect the power source (not shown) or cable LAN when the connecting portion is not connected to; and a body detaching button 11. On the front face of the body 1, the body display section 7 is provided. This body display section 7 includes: a camera lens 3; an illumination 4 for illuminating a doubtful person at night; LED 5 for displaying a supply state of supplying electric power and for displaying a state of communication; LED 5a for displaying a state of using the camera; and a reset switch 6. The housing 2, which is a body case, and the body support table 10 include: an electric power connector 16 for receiving electric power of 100 V or another voltage supplied by an electric power company or a solar battery; a cable LAN connector 25 to be connected with cable LAN; LAN card 8 for exchanging a signal; a camera module 29 connected with the camera; and an adapter board 9 having a connector 9a of IT terminal cable having an electric power source cable for supplying electric power and also having a signal cable used for communication. The adapter body 1 is supported by the body support portion 10 which movably supports the body 1 according to the installing condition. In both end portions of this body support table, the pawl rail portions 10d, which pinch the end face of the body 1 and fix the body 1 in the sliding state, are arranged being opposed to each other. The inside of the adapter body 1 is formed to be hollow, and LAN card 8, which moves in the same manner as the adapter body 1 and attaches to the adapter board 9, is moved in the direction of the arrow in the drawing. When the adapter body 1 is detached, the detaching bottom 11 provided on a lower portion of the case 2 is pushed, so that the adapter body 1 can be detached from the body support table 10.

The above adapter body 1 can be attached to a stationary device such as a wall face, a floor face or a roof face through the body support table 10. Alternatively, the above adapter body 1 can be attached to a movable device such as a train, a car, a robot or a crane. As shown in Figs. 10 to 14, the support table 10 is fixed to the wall fixture 13 through the support shafts 13A. However, for example, in the case where the adapter 1 is used when it is put on a floor, or in the case where the adapter 1 is used when it is directly fixed to a surface or a side of an electric appliance 41 such as an air conditioner or a refrigerator, or in the case where it is assumed that the adapter is attached to a high wall face, as shown in Figs. 14 to 18, on the side along the flat shaft on the rear face 10f side which is a rear portion of the body support table 10, on the upper and the lower side of Fig. 14, the support table 10 is arranged so that the upper bearing portion 10b, the lower bearing portion 10c and the floor attaching portion 10e can be respectively arranged coming into contact with the support table 10 in the front portion. In the wall fixture 13, a pair of support arms 13a corresponding to the upper and lower bearing portions 10b, 10c of the body support table 10 are provided. At the forward end of the upper support arm, the upper shaft portion 13b for pivotally supporting the upper bearing portion 10b is provided, and at the forward end of the lower support arm, the lower shaft portion 13c for pivotally supporting the lower bearing portion 10c is provided. As shown in Figs. 10 and 11, the hollow portion 13d is formed with which the rear face 10f of the body support table 10 comes into contact in the setting state when the wall fixture 13 is pushed into the body support table 10 side. The floor attaching portion 10e of the body support table 10 and the upper shaft portion 13b and the lower shaft portion 13c of the wall fixture 13 are provided being engaged with each other. At a rear corner portion of the body support table 10, the through-hole 10g, from which IT terminal cable 9b is drawn out, is formed. The end face of this hole is chamfered so that IT terminal cable sheath can not be damaged even when IT terminal cable comes into contact with the end face of the hole. The through-hole 10g may be clogged with a very thin film or a detachable plug which can be easily broken with a tool such as a driver at the time of use.

Operation of the information processor of the present invention will be explained in the case where the processor is put on a floor and in the case where the processor is fixed to a wall. First, in the case where the processor is put on a floor, the support table 10 is changed from the state shown in Fig. 15 to the state shown in Fig. 17, that is, the body support portion 10 is rotated by 90° so that the upper bearing portion 10b and the floor attaching portion 10e can be arranged in a lower portion, and the upper shaft portion 13b of the wall fixture 13 is changed from the upper bearing portion 10b to the floor attaching portion 10e. In this way, the support table 10 can be put on the floor. When, the rear face 10f of the body support table 10 tightly comes into contact with the hollow portion 13d, it can be fixed. The adapter body 1 can be manually slid on the body support table 10 from the state in which the camera lens 3 is directed to the front to the state in which the camera lens 3 is directed downward by the angle of about 30°. In this connection, concerning the attaching positions of the adapter body 1 and the support table 10 shown in Figs. 10 to 18, when one of the body detaching button 11 and the connecting portion cover 2A is fixed to the support table 10, the other is arranged at a position distant from the support table so that the adapter body 1 and the support table 10 can be attached to each other even when they are positioned upside down. Further, the structure of the body detaching button 11 and that of the connecting portion cover 2A are similar to each other in the external appearance. The display section 7, the body detaching button 11 and the connecting portion cover 2A are respectively arranged at positions on the circular outer diameter which are separate from each other at substantially regular intervals. Therefore, the display section 7, the body detaching button 11 and the connecting portion cover 2A are designed so that they can look good. In the case where the body case 2 is spherical, the display section 7, the body detaching button 11 and the connecting portion cover 2A may be arranged at positions on the sphere so that they can look good. In this case, the following effects can be provided. According to the position where an electric appliance sends a signal, when the electric appliance is installed, a position where the adapter having a camera is installed is freely determined so that information about the state in a room can be obtained. Alternatively, the adapter having a camera is put on a desk so that it can be used instead of a television telephone. Alternatively, when a large space is covered a large number of devices or when a space in which some portions can not be seen is covered, the adapter having a camera can be put at any position.

Next, the case in which the adapter is fixed on a wall will be explained below. When the wall fixture 13 is attached and fixed to a side of a device such as an air conditioner, a refrigerator, an electron range, DVD video recorder or an audio device (not shown) or when the wall fixture 13 is attached and fixed to a wall face in the neighborhood of the electric appliance, the body support table 10, which is pivotally supported by the wall fixture 13, can be moved according to the preference of a user being oscillated to the right and left, that is, the body support table 10 can be oscillated by the angle of about 50°. Further, the adapter body 1 can be slid on the body support table 10 downward by the angle of about 30°. In this case, wireless LAN card 8, which is attached to the adapter board 9 in the case 2 of the adapter body 1, coincides with the sliding direction of the adapter body 1 in the direction of the arrow in Fig. 14 and moves by sliding in the hollow portion of the body support table 10. It is possible to provide an effect that the adapter having a camera can be attached at a desired position in a room so that a state in the room can be widely monitored.

In this connection, in the case where the adapter is connected so that it can be used as a television telephone, it is necessary that an image display device (not shown) is integrated in the information processor described above.
Further, it is necessary to provide signal lines to be connected to a display device such as a monitor. Further, when an outside microphone and speaker are used, it becomes necessary to provide A/C and D/C converter and jacks (not shown) . However, in the case of a structure, in which the microphone has already been integrated, the adapter can be used as it is. In the case where the antenna of the adapter 1 is put into practical use as a reader and writer, when an electric power sending and receiving means (not shown), which sends electric power to a tag by wireless, and a control means (not shown) for reading and writing a content of the tag are provided, the information collecting range can be extended as the information processor. Therefore, operation of all electric appliances in a home can be made easy and the user can make a good living.

Next, operation of the adapter body 1 of the present invention will be explained below. Electric power is supplied to the adapter body 1 through an electric power line connected with the electric appliance 41. Operation signals are exchanged by cable communication or wireless communication with the cellular phone 49 or the portable personal computer 50, 51 through the Internet 47, and the electric appliances in a room such as an illumination or an air conditioner are turned on and off by the signals. Further, it is possible to make a preparation of a cooking unit before an operator returns home. Further, it is possible to obtain information of a defective state of the air conditioner which was stored. Furthermore, it is possible to obtain information of food accommodated in the refrigerator. Furthermore, it is possible to obtain information of the document, which was made in the past, from the personal computer arranged in the room according to S/W accommodated in the electric appliance communication control section 20. Furthermore, the information device such as a camera function 29, 3, which is attached to the adapter body 1, can be operated by utilizing electric power supplied.

These information devices may be a device which is linked with an electric device, for example, a command is given by voice when a speaker is used for extracting information from a personal computer. However, an object and function of the electric device may be different from those of the information device. For example, like the dehumidification setting of air conditioning or the temperature setting of cooling and the picking up an image signal from the room, or like the quickly cooling operation for freezing the cooling chamber in the refrigerator and the speaker recognizing registration by utilizing a microphone, even when it is completely different from the original operation of the electric device connected, no problems are caused, and the respective one is processed by a different protocol. However, concerning the adapter body 1 which is an image processor, it is possible to obtain a wireless system capable of simply utilizing the original function of the image processor without making an initial investment in the image processor. The detail are described as follows. Since the electric power supply is attached by utilizing the electric device; the electric power supply can be simply obtained; the arrangement of the electric devices, which are positioned or substantially fixed in the room, can be used; and since the communication protocol, which is accommodated in the adapter body 1, is utilized, the protocol can be simply obtained without using a special network.

Next, explanations will be made into a simple operation such as turning on and off an air conditioner by utilizing wireless communication. With the cellular phone 49, a command is given to the air conditioner 41 provided in the home so that a reheat dehumidifying operation, in which a portion of the heat exchanger in the air conditioner is operated in heating and a portion of the heat exchanger in the air conditioner is operated in cooling, can be conducted to take countermeasures against humidity. The command is sent to the repeater having a global address such as a modem, a gate-way and a rooter 44 through the Internet 47, and the local address is selected here and then wireless communication is made so as to send the command to the air conditioner 41. This command sent through the Internet is received by the network module 32 of the adapter 1, which is an information processor, and further received by the communication driver 23 via I/F 28. Then, it is recognized by the control section 30 according to the control number that the mail has arrived from the cellular phone 49 of the person himself, and the content of the mail is stored in the storage 21. The control section 30 for controlling the protocol 24 analyzes the mail by the protocol SMTP corresponding to the mail according to the control number and reads out the command. The thus read command is transmitted to the electric appliance communication control section 20.

In the case where the communication is sent in the form of a document from the outside personal computer 50 or PDA 51 to the personal computer provided in the home, the adapter 1 analyzes the command by the protocol such as HTTP or FTP and reads out the command. In the case where it is a command given to the information obtaining means such as a network camera, the control section 30 conducts processing so as to use a different protocol, and the result of the processing is transmitted to the camera control section 22. The electric appliance communication control section 20 conducts a signal-conversion upon the dehumidifying operation command given to the air conditioner 41 by the air conditioner processing program which has previously been downloaded from ASP 48 through the Internet 47 so that the dehumidifying operation command can be made to be an understandable signal for the air conditioner control section 19. The thus obtained signal is transmitted to the air conditioner control section 19 is transmitted by a communication line through the connector 16. The air conditioner control section 19 conducts controlling according to the command and starts a dehumidifying operation and replies to the adapter control section 30 that controlling has been made according to the command. The adapter control section 30 makes a reply of the mail stored in the cellular phone 49 and sends the reply outside from the network module 32 to the repeater 44 by wireless.

The interface capable of exchanging electric power and signals with the electric appliance 41 as described above is arranged close to each electric appliance 41, 45 as the adapter 1. When the adapter 1 has a function of connecting the electric power supply with these electric appliances and conducting communication, the network system can be simply realized. The adapter 1 of the interface can be safely and simply connected to the control unit in the electric appliance by the connector 16. Further, it is possible to fix the adapter 1 onto a wall face or a roof face with a nail. Alternatively, it is possible to hook the adapter 1 on the electric appliance 41, 45. Alternatively, the adapter 1 may be put on a desk. The adapters 1 corresponding to the electric appliances may be composed of the same structure. Processing programs of the electric appliance communication control section 20 and the camera control section 22, which are different in the inner constitution, can be rewritably downloaded from ASP 48. Therefore, the adapter 1 can cope with any electric appliance and information processor.

The adapter body 1 is capable of exchanging a control signal and electric power with the electric appliance 41. When the communication module in the adapter is replaced with another one or when he adapter uses a chip corresponding to a plurality of communication systems, the adapter can cope with various corresponding systems. Since the connector 25 coping with cable LAN except for wireless and the necessary protocol 24 are provided, it is possible to make the adapter agree with the existing cable LAN in the home. Since the adapter can be connected to LAN in the home without using the other devices, it is unnecessary to arrange a new network or purchase a centralized controller. Therefore, it is possible to compose a network of electric appliances, office facilities and factory facilities. The support table 10 and the fixture 13 for supporting the adapter body 1 are not limited to the above specific embodiment. The adapter may be interposed between the electric appliances. Alternatively, the adapter may be slidably, directly hooked with a spring. Alternatively, the adapter may be integrated with a manufacturing apparatus or a robot crane as a part.

The adapter body 1 of the present invention can be applied to various communication system and connected to an access point having a rooter by wireless. Therefore, LAN cables and electric power cables are not drawn out from the device and the adapter. Accordingly, the devices can be easily composed into a network and the electric appliances can be remotely controlled. This adapter 2 is provided with the network protocol processing section such as HTTP (Hyper Text Transfer Protocol) coping with a file, STMP (Simple Mail Transfer Protocol) capable of processing a mail, DNS (Domain Name System) and TCP/IP (Transmission Control Protocol/Internet/Internet Protocol), cable LAN control section and the camera control section. Therefore, it is easy to conduct a renewal of S/W, selection of the communication system, automatization of the setting, remote control of the camera, registration of the speaker by voice information and initial setting of security. The information processor of the present invention accommodates the following protocols and conducts communication. Therefore, at least three protocols, by which information can be exchanged between a plurality of sources of sending and receiving, are incorporated into the information processor. The integrated protocols are described below. The protocol of exchanging information with the electric appliance to be connected for communication; the protocol of obtaining information from the information obtaining means such as sensors and operating the other device; the protocol of exchanging information and software with the outside system; the protocol of storing information in the personal computer; and the protocol of receiving data analyzed by the personal computer and sending the data to the outside.

In the adapter body 1, in portions such as a back portion of the case 2 except for the front face, a portion of H/W, which can be easily detached, for example, the cable LAN connecting section of the insertion connector structure capable of replacing the network module 32 is provided. Therefore, when S/W is automatically renewed, it is possible to change to electric appliances and information processors of all type communication systems. Accordingly, even when times have changed and the communication system and the contents of information to be processed are changed and new products appear in the market, the adapter can cope with the change. When the adapter 1 is used for communication, for example, S/W can be rewritten through the network. Therefore, it is unnecessary for the driver of the device to have a large capacity of memory in the first stage, that is, the driver of the device can be manufactured by using an inexpensive micro-computer. At the time of making update or receiving maintenance service, the renewal can be automatically accomplished without asking a service man to do the renewal, and it is not necessary for a user to take time for the renewal. The automatic renewal can be set in detail by the user. According to the arbitrary setting conducted by the user, the communication can be maintained by an arbitrary communication system such as cable LAN, and a manual renewal can be simply made by the terminal such as the outside PC 50 or the cellular phone 49 through the communication.

In the structure shown in Fig. 1 composed as described above, several types of adapter bodies 1, which agree with the existing home network (IEEE802.11b) may be manufactured and prepared. When the adapter body 1 is provided with an interface, which becomes the de facto standard (Compact Flash), and the network module is replaced, the adapter 1, which is an interface coping with wireless LAN, may be connected in accordance with the communication system of the home network. Since the adapter can be connected to the access point of the existing home network or the rooter 44, the adapter can be connected to the home network by the initial investment of only the adapter without making an investment in the centralized controller and the terminal. As a result, the communication system can be composed of the cable LAN system, the wireless LAN system, the telephone line system or the electric lighting wire system. Therefore, the network system is not restricted.

The adapter can flexibly cope with a new product, a security system and a communication system prevailing in the times. Therefore, when the network is changed or in the case of removal, expenses necessary for rebuilding the system can be reduced. In the case where the adapter body 1 and the electric appliance are connected to each other, the connector 16 is arranged on the outside or on the case of the board 17 of the electric appliance such as an air conditioner as shown in Fig. 2, so that the adapter body 1 can be easily connected to the electric appliance 41. Various protocols such as HTTP, SMTP, DNS and TCP/IP are built in the adapter body 1. Therefore, when access is made by various terminals such a cellular phone 49 or a personal computer of PC 50, which is connected to the Internet 47, through the communication form of HTTP and others, the electric appliance and the information processor can be remotely controlled. In the conventional case, in order to connect the electric appliance and others with the home network, it is necessary to purchase an electric appliance exclusively used for the network. Therefore, the electric appliance must be manufactured according to an order when the order is given being classified into an electric appliance exclusively used for the network and an electric appliance not used for the network. However, according to the present invention, the necessary protocol is selected from the communication protocols stored in the device so that it can be used. In the above explanations, STMP and IR are explained as software. However, from the physical viewpoint of IEEE802. 11b, from the meaning of being capable of using it except for this IEEE802.11b, as long as the frequencies are the same, a common antenna can be used and elements and chips to be mounted on the board can be made to cope with the circumstances.

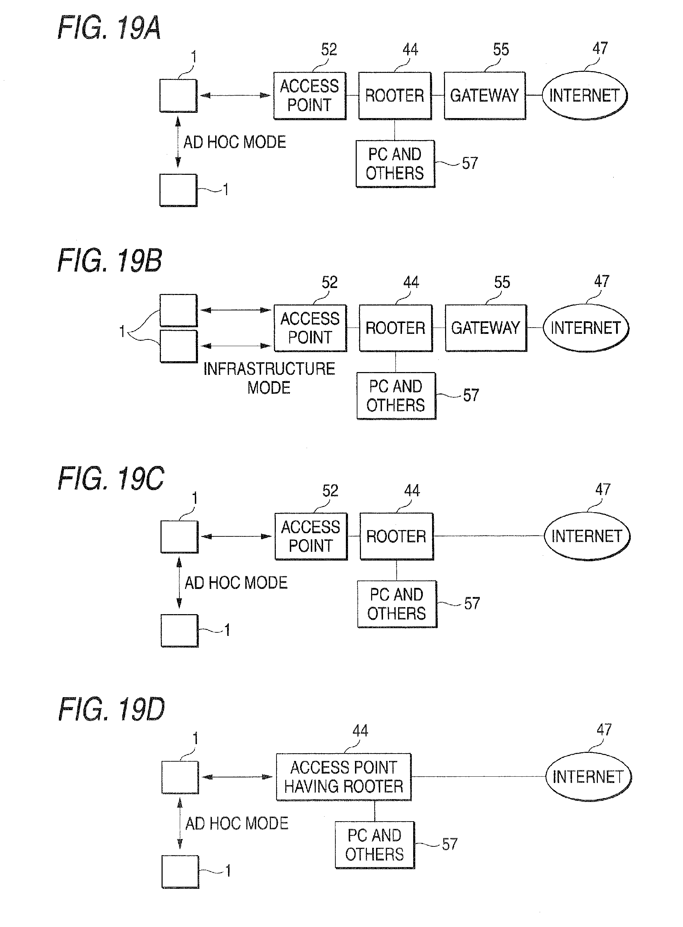

Fig. 19 is a schematic illustration for explaining the communication conducted between home networks by utilizing the Internet 47, which is an outside network, and the adapter bodies 1 which are a plurality of information processors. In Figs. 19(a) and 19(b), concerning the communication conducted through the Internet 47, the outside address is converted into the inside role address by the gateway 55. At this time, for the obj ect of maintaining the security, IP restriction is made. Next, IP is viewed by the rooter 56, and the root in which information is to be transmitted is judged and distributed to the bucket. Due to this distribution, the information is divided into the personal computer 57 and the access point 52 corresponding to a plurality of adapters. Wireless communication is made from the access point 52 to the adapter body 1. Concerning the root after the access point 52, in Fig. 19(a), wireless communication is made between the adapter bodies 1 by the ad hoc mode. Fig. 19(b) explains a communication form conducted by the infrastructure mode in which a signal is exchanged between the individual adapter bodies and the access point 52. Fig. 19(c) is a schematic illustration for explaining the wireless communication system by the ad hoc mode through the rooter 44 and the access point 52 in the case where the communication is conducted from the Internet 47 by the global address without using the gateway. Fig. 19(d) is a schematic illustration of the system operated through the access point 44 having a rooter in the case where the communication is conducted from the Internet 47 by the global address without using the gateway. These devices, which conduct a relaying operation between the Internet and the adapter body 1, is referred to as a repeater. In this connection, even in Figs. 19 (c) and 19 (d), in the same manner as that shown in Fig. 19(b), the infrastructure mode communication can be conducted between the adapter body and the access point 52.

The ad hoc mode communication form can be utilized for the method in which the network resource is effectively used in such a manner that the adapter body 1 conducts communication with another adapter body 1 by the sending and receiving means such as the network module 32 and the cable LAN 25 and the result of the communication is returned by one set in the lump so that the network traffic (the network load) of the access point 51 can be reduced and the network resource can be effectively used. This method can be applied to a network to cover a small home except for the adapter type. This method can be also applied to a network to cover a wide range.

In the present invention, irrespective of the connection of the adapter body 1, which is an information processor, with the electric appliance, or irrespective of the installation of an information inputting means such as a camera, when a plurality of adapter bodies 1 are arranged and the communication is conducted between the adapter bodies 1 or between the adapter body and the repeater, the network system is formed. Due to the foregoing, in the case where the sensor function is provided, the sensor information obtained by the information processor can be recorded, analyzed and processed by the adapter body 1, ASP server in the outside system or the personal computer 50 connected to the network. Further, the sensor information can be freely picked up. Further, when the sensor information is automatically or manually analyzed, the network system can be made to be effective and the objective system can be made safe in view of maintaining the security. Furthermore, service provided by shops can be improved. In the same manner as that described above, when the information obtaining means such as a camera is built in, the obtained information can be used for monitoring and maintaining the safety. Further, according to ASP 48, the necessary devices such as S/W terminal used for analysis and the adapter body 1 are renewed, so that the user can change parameters, which are capable of setting the energy efficiency and the upper limit of the expense, from the terminal.

The adapter body 1 receives pieces of room air information such as a room temperature and humidity from the control section 19 of the air conditioner and sends the received information to ASP 48. ASP 48 operates as follows. When the temperature or the humidity exceeds a predetermined value, the adapter body 1 gives a warning sound. Further, it is possible for ASP 48 to send a mail to the cellular phone 49. Due to the foregoing, a change in the environment in which a pet is living can be known and further a fire detection warning can be known through the mail.

The adapter body 1 detects the information of a moving body, which has been obtained by the camera lens 3, the camera module 29 and the camera control section 22, by the device, the control section of which has already been disclosed by the image processor, the patent right of which was already applied in the official gazette of JP-A-10-240945. The image information, which is obtained when the moving body is detected, is sent to ASP 48. ASP 48 sends this image information to the cellular phone 49 together with the image.

The image processor of the adapter body 1 has a technique of detecting a moving body and trimming a detailed portion of the image including the moving body. Due to the foregoing, the moving body can be displayed by an enlarged image. Therefore, a necessary portion can be positively recognized. According to the setting, either the enlarged image or the usual image can be sent or changed by the cellular phone 49. Alternatively, after the mail of detecting the moving body has been received, access may be made to the server so that either the enlarged image or the usual image can be selected. When a user goes out, a moving body in the room can be positively recognized. Therefore, a pet can be monitored in the monitoring system in which the adapter of the invention is used.

When the information of the image processor and the information of the electric appliance are combined with each other, in the case of air-conditioning of a living room, an individual piece of information such as a piece of information about an air current is obtained, and according to the person recognizing information obtained by the sensor or the image recognition, the setting can be changed and a plurality of pieces of information can be combined with each other so as to conduct controlling. At the time of removal and shopping, when the adapter is replaced, the setting of a person can be easily conducted.

When the interface having a camera coping with wireless LAN is used, it is possible to conduct remote control upon the camera. Therefore, when a command is given from the terminal, an image can be inspected. Further, it is possible to store the image in ASP. In this way, the obtained image can be used for the simple security. In the case where the network camera is arranged at a high position, it becomes difficult to lay an electric power line to the network camera. However, when the electric power line of the network camera is connected to an air conditioner located at a position from which the entire room can be seen, the length of the electric power line of the network camera can be reduced to the minimum. When the image recognizing technique of a camera for recognizing an image is utilized or when the irradiation of infrared rays is utilized, it is possible to make other electric appliances, which have no communication devices, respond to a command. For example, when LED 5 provided in the adapter body is used for the illumination of a room and turned on and off, it can contribute to a simple crime prevention. When both the infrared ray sensor and the adapter camera are used, the security level can be enhanced. When the camera is connected to an air conditioner, in order to prevent the dependency upon a position where the electric appliance is arranged, that is, in order to endure the range of vision of the camera, the camera angle is changed by a motor driven by electric power supplied from the electric appliance. When the adapter is provided with AC connector or a battery, it can be used as a handy portable camera.

As described above, according to the present invention, it is possible to conduct remote control upon the home network system through the Internet 47 and the repeater 44 by the cellular phone 49. It is possible to conduct communication from the repeater 44 to each adapter body 1 by wireless so that the adapter body 1 can be operated. The adapter body 1 is provided with a camera and an infrared ray emitting device. Therefore, it is possible to remotely control an illumination device, an electric appliance such as an audio device, an automatic inspection device in a hospital and an opening and closing door in a public facility, that is, it is possible to remotely control devices which can not be directly controlled by the network system, that is, it is possible to remotely control devices which can not be directly controlled by wireless communication or cable communication by using infrared rays when the information processor of the present invention is used. In the adapter body 1 connected to a washing machine arranged out of doors, a human body detection sensor, in which infrared rays are used, is provided together with a speaker, so that the human body detection sensor can be used as a crime prevention sensor to be operated at night. Examples of remote control, in which the information obtaining section of the information processor is used, are to reserve a video recording and to open and close a door. When a doubtful person appears out of doors or in a room, a user who has confirmed an image of the doubtful person by the cellular phone conducts remotely controlling the information processor so that the doubtful person can be repelled. As described above, it is possible to simultaneously control a plurality of devices by one information processor. In this way, it is possible to incorporate the remote control operation devices into the network by the information processors of the present invention. Further, when a plurality of information processors, in which the light emitting elements LED for emitting light of a single color such as red light are provided being distributed on a spherical face, are arranged, it is useful for a plant factory in which growth of plants can be facilitated. When these information processors are used being combined with cameras, growth of the plants can be monitored.

Further, a selection of the communication system can be simply made by replacing the network module 32. When the function of a device such as an air conditioner is multiplied in the future and the number of the settings is increased, in the case where a centralized control is conducted being connected to the network and further the setting is made once more in the case of a removal, information stored in the adapter body 1 and the server can be simply transferred. Even if the adapter body 1 is replaced with another one, when a command is given to the server so that information can be exchanged, it is possible to exchange information by the communication system. As described above, even when it is a wireless communication or a cable communication using light, the present invention can provide a handy information processor.

In the home network system of the present invention, the constitution of the information processor and the constitution, in which the adapter of the interface coping with wireless LAN is connected to the electric appliance, can be freely composed. Further, it is possible to exchange electric power and signals between the devices. When the communication module in the adapter body 1 is replaced or a chip corresponding to a plurality of communication systems is used, it is possible to cope with various communication system. Alternatively, it is possible to agree with another LAN communication system which is existing in a home. Therefore, the home network system of the present invention can be connected to another LAN in the home without using another device. Accordingly, it is unnecessary to newly purchase a network and a centralized controller, so that the network system can be composed at a low cost.

The information processor of the present invention can cope with various communication systems. In the wireless system, the information processor of the present invention can be connected to an access point having a rooter by wireless. Therefore, the LAN cable and the electric power cable are not drawn out from the device and the adapter. Accordingly, the device can be easily integrated into the network and a signal using software for control can be transmitted through a communication line directly connected. Alternatively, a device arranged at a separate position can be subjected to remote control. For example, the information processor of the invention can be applied not only to the network in a home but also to the protocol HTTP (Hyper Text Transfer Protocol) capable of displaying a home page on the browser, the protocol SMTP (Simple Mail Protocol) for sending a mail, DNS (Domain Name System), TCP/IP (Transmission Control Protocol/Internet/Internet Protocol). When these network protocols are used, it is possible to compose net works for connecting factories, offices, stores, station facilities, transportation facilities, schools, libraries, warehouses, grounds, air ports and parks. When the information processors of the present invention are arranged being distributed at high positions of roofs, illumination towers and bulletin boards and when independent electric power sources such as solar batteries are also used, the facilities used for service can be built at low cost. Further, as the information security has already been explained before, when a microphone and a voice module are incorporated into this information processor, the speaker recognition can be registered by the microphone through the Internet. Unless the registered person allows the information processor such as a camera to be operated with the microphone, that is, unless the predetermined word is checked, nobody can see the image. The voice recognition means for executing the recognition of a speaker is described as follows. For example, when a phrase, which has previously been registered, such as "Open the door.", "Operate the camera." or "Output an image on the personal computer." is uttered by a person, the frequency data of the voice is processed being calculated, and it is judged whether or not a person is the person himself and the commanded operation is executed. When it is wanted that an unnecessary function such as a camera or a speaker is not used, the circuit can be shut off by the switch 6. Therefore, the information processor can ensure the privacy and security. Accordingly, it is possible to build a useful network.

The speaker recognition is explained above in which a specific person is checked and the specific person is registered so that only the specific person can operate the information processor, and a validation is given to the person by a voice using the same microphone through the Internet. However, the person himself can be checked not only by the voice but also by the image of himself, that is, by the recognition of a live body. In order to discriminate a specific person, a characteristic of the person's live body may be registered, for example, the face of the person may be registered and the person can be checked by comparing the registered face with an image. Only the person himself checked in this way can be operate the information processor as he likes.

The adapter body 1 of the present invention can be changed so that it can be applied to all type communication systems and electric appliances when a portion of H/W, which can be easily detached is replaced, or when S/W is automatically renewed. Therefore, even when times have changed and the communication system and the electric appliance have changed, the information processor of the invention can cope with the changes. In the adapter body 1, it is possible to rewrite S/w through the outside system. Therefore, it is unnecessary for the drivers of various devices to have memories of a large capacity in the beginning. Accordingly, it is possible to manufacture the adapter body 1 at low manufacturing cost. At the time of making update or receiving maintenance service, the renewal can be automatically accomplished without asking a service man to do the renewal, and it is not necessary for a user to take time for the renewal. The automatic renewal can be set in detail by the user. According to the arbitrary setting conducted by the user, the communication can be maintained by an arbitrary communication system such as cable LAN, and the manual renewal can be simply made from the terminal such as the outside PC or the cellular phone through the communication.

The adapter body 1 is provided with a camera control section 22 for controlling an image. Alternatively, instead of the camera control section 22 or together with the camera control section 22, the adapter body 1 is provided with a voice control section for controlling a voice. When the camera 3, the microphone and the speaker are mounted, the simple security system capable of operating the electric appliance or the simple monitoring system can be built. Alternatively, when various sensors are provided and remotely controlled, it is possible to direct the production in a factory and guide movements of employees in the factory. The adapter body 1 having a camera can freely select between the image taken at the predetermined position and the image taken when the position and direction of the camera are shifted manually or by the operation of remote control. Even when no electric power is supplied from the electric device, it is possible to supply electric power from a solar battery or a fuel cell. In the case of using an independent electric power source accommodated in a support device different from the electric appliance, when a small light information processor of the present invention is singly brought in or a plurality of information processors are arranged, a network can be formed anywhere even out of doors. The adapter having a camera, which is an interface coping with wireless LAN, can be utilized for security and further can be utilized for monitoring a pet. The flat information processor or the circular information processor of the present invention looks good in the design. Therefore, it can be arranged anywhere and used for decoration.

In the case where the adapter body 1 is given a global address, it is possible to directly control the electric appliance and confirm a state with the camera. However, even in the case where a private address is set in the gateway as a repeater, without renewing the device and S/W for the gateway and each terminal, when ASP capable of conducting communication is prepared, the information synchronized by the access from the adapter 1 can be inspected by the cellular phone. Therefore, according to the information, it is possible to conduct remote control. Further, it is possible to reduce expenses for building the system.

By ASP server and S/W built in the adapter body 1, each information processors can be attached to each of the plurality of electric appliances by 1 : 1. Further, by the infrared ray sensor provided in the information processor, a plurality of devices in a home can be remotely controlled. It is possible to record a state of operation of the electric appliance in the recording means adapter, which is provided in the information processor, and in AP server. It is also possible to pick up the state of operation of the electric appliance from the recording means adapter and AP server. When it is asked to analyze the state of operation of the electric appliance or when analysis S/W is downloaded by PC in the home, the efficiency of the home network can be measured. When the setting is changed by recording the obtaining information and the state of operation or when the setting stored in the personal computer is inputted again, it is possible to simply obtain necessary information.

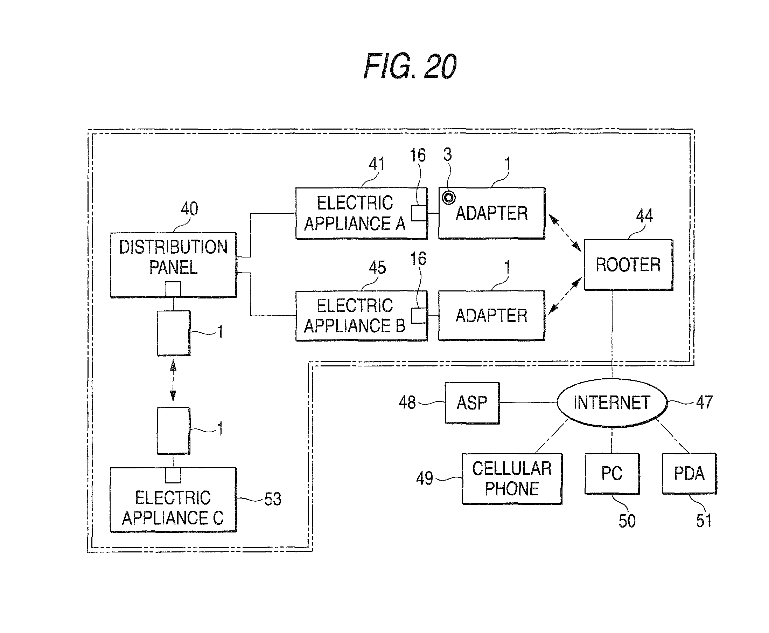

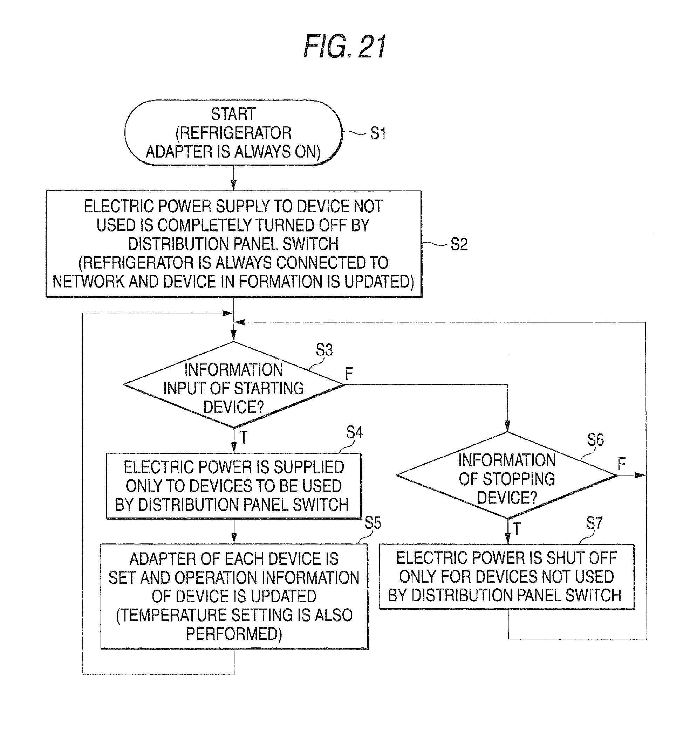

Next, explanations will be made into a device and method for reducing energy consumption in the electric appliances, which are arranged in homes, offices, shops and factories, by the network utilizing the information processor of the present invention. Fig. 20 is a network arrangement view for explaining a reduction of stand-by electric power of the information processor of the present invention. Fig. 21 is a flow chart for explaining a reduction of stand-by electric power of the information processor of the present invention.

In the information processor of the present invention, an operation signal for operating the electric appliance is obtained from the outside by the signal sending and receiving means such as an antenna arranged in the adapter body. Further, information operated by the operation signal is sent to the outside from the signal sending and receiving means. In this adapter body, corresponding to various communication systems such as a cable communication system or a wireless communication system used for sending and receiving information signals, the protocol capable of processing an operation signal and an information signal is accommodated, and conversion of a signal is conducted in the control section so that the electric appliances such as an air conditioner, a refrigerator and a factory production facility can be controlled. The adapter body of the present invention includes a device communication section controlling section, which is operated by an operation signal sent from the outside, for controlling the electric appliance. In the case where a plurality of information processors described above are provided and a network for controlling each electric appliance is built, an electric appliance, to which electric power must be supplied at all times, exists in this network, and an electric appliance, to which electric power is not necessarily supplied at all times, that is, to which electric power is supplied only when it is needed, exists in this network. The electric appliance, which is used only when it is needed, consumes electric power at all times for stand-by so that it can be used when it is needed. Even in the electric appliance to be used in a specific time zone, there are two types of electric appliances. One is an electric appliance to which electric power must be supplied at all times, and the other is an electric appliance in which it is allowed to cut the supply of electric power although it is inconvenient. In the network including a plurality of information processors of the present invention, according to the necessity and importance of the supply of electric power to the electric appliances used in the network, the electric appliances can be classified into a plurality of stages such as the first stage, the second stage and the third stage. According to the setting of the plurality of stages, by the communication conducted among the adapters provided in the network or by the communication conducted among the adapters through the repeater, it is possible to classify the stoppage of operation.

Referring to Figs. 20 and 21, the specific constitution of the present invention will be explained below. In the case where the stand-by electric power of the electric device of the information processor is cut, electric power is supplied from the distribution panel 40 to the electric appliance A such as an air conditioner and the electric appliance B such as a television set and others. Further, to the control unit of the electric device 41 which is the electric appliance A such as an air conditioner, the adapter 1 having the camera 3, which is a wireless LAN interface capable of being simply detached, is attached. In this adapter 1 having the camera 3 which is a wireless LAN interface capable of being simply detached, the camera control section 43 is provided. This camera control section 43 exchanges a signal by wireless with the access point 44 having a rooter which is connected to the outside by the existing telephone line or the optical fiber. In the same manner, the board arranged in the electric part box of the electric appliance 45, which is the electric appliance B such as a television set, conducts communication by wireless with the repeater 44 to which the adapter 1 having the microphone and camera, which is the wireless LAN interface, is connected. Alternatively, the circumstances are the same in the electric appliance B such as a vacuum cleaner or an electric hot-water heater which is connected to a plug socket in a room and not subjected to communication control by the adapter body.

The adapter body 1 receives information of consumed electric energy from the control section 19 of the electric appliance 41 such as an air conditioner and sends this information of consumed electric energy to ASP 48. ASP 48 checks the information of consumed electric energy. In the case where the consumed electric energy exceeds a predetermined value, a warning sound is emitted from a buzzer being commanded by the adapter body 1 or a mail is delivered from ASP 48 to the cellular phone 49. In this way, an excessively large electric energy consumption can be previously prevented.

Outside the home, ASP (Application Service Provider) 48, the cellular phone terminal 49, PC 50 and PDA 51 are connected to the Internet 47 which is an outside network connected to the repeater 44. In this connection, examples of the electric appliances provided in the network system of the present invention are: an electric appliance such as a television or an illumination; an air conditioner device such as a ventilation fan or a blower; a cooking device such as an electron range; and OA device such as a personal computer PC. The adapter of the present invention can be used not only for the network formed in the home but also for the network formed in an office, a restaurant, a supermarket and a school. The air conditioner 41 or the television set 45 is used sometimes and not used sometimes. When no residents are in the home, the air conditioner 41 or the television set 45 is not used in many cases. The circumstances are the same in the case of a shop. In the home, like the electric appliance C53 arranged in a different room, a refrigerator and an illumination, to which electricity must be supplied at all times, are arranged. In the case of a food refrigerator arranged in a store, when electric power supply is cut, the food accommodated in the food refrigerator will go bad, which causes a great loss. In the case of a factory or an office, the server and the emergency illumination need the supply of electric power at all times. Further, a hospital always needs the supply of electric power.

The electric appliances controlled by a plurality of adapter bodies are classified into a plurality of stages according to the necessity of supplying electric power. The plurality of stages are: the first stage which is an electric device to which electric power must be supplied at all times; the second stage which is an electric appliance A to which electric power is not necessarily supplied at all times because the electric appliance A is used sometimes and not used sometimes according to the time zone; and the third stage which is a plug socket to which a vacuum cleaner is connected. For example, an electric appliance such as a refrigerator, which is continuously used all the year, is classified into the first stage, and an air conditioner is classified into the second stage. In this case, concerning the supply of electric power, to the former device to which electric power must be supplied at all times, electric power is continuously supplied together with the adapter body which conducts communication control. However, to the device classified to the second stage, it is possible to give an electric power shutoff command by turning on and off the switch on the distribution panel from the outside via the repeater 44. That is, according to the command given from the outside, the adapter body 1 is operated for controlling the opening and closing operation of the switch arranged on the distribution panel 40 via the adapter body 1 provided in the electric appliance C53. That is, in the case where a command of turning off is given from the outside, through the adapter capable of conducting communication with the electric appliance C53 connected to the electric power supply which is electrified at all times, a circuit switch on the distribution panel connected to the electric appliance A, B is shut off. Of course, it is impossible for the adapter, to which electric power is supplied from the electric device connected to the circuit in which the electric power supply is shut off, to conduct communication. Therefore, electric power is shut off not only in the electric appliance A, B but also in the adapter connected to the electric appliance. Therefore, the stand-by electric power used for controlling these devices and the electric power consumption generated while voltage is being impressed upon a register in ACDC converter can be eliminated. Therefore, electric energy consumption can be reduced. That is, in the case of the electric appliance A which consumes electric power sometimes and does not consume electric power sometimes all the year, stand-by electric power, which is generated when the electric appliance is not used, is shut off so that energy can be effectively saved. In the case where the electric appliance A needs to be turned on, it is possible to conduct controlling anywhere so that the switch on the distribution panel can be turned on through the adapter body to which electric power is supplied at all times. Further, after the switch has been turned on, the electric appliance A can be continuously used until a command of turning off is given.

In this connection, of course, the adapter body 1 to control the distribution panel 40 may not be provided with the information inputting means such as a camera. In the case where the adapter body to control the electric appliance A41 is provided with an electric power source such as a solar battery capable of supplying electric power at all times, a switch may be provided in the electric power supply portion of the electric appliance A41, and the switch may be turned on and off by the adapter body 1 to control the electric appliance A41 so as to reduce the stand-by electric power. As described above, according to the present invention, a plurality of adapter bodies to control a plurality of electric appliances are connected to each other by the network so as to conduct communication among them, and the plurality of electric appliances are classified to several stages according to the necessity of supplying electric power, so that electric power can be shut off step-wise. Further, it is possible to build the network at low cost. Furthermore, additions can be flexibly made afterwards.

Fig. 21 is a flow chart for explaining cutting of stand-by electric power of the electric appliance of the information processor of the present invention. In the flow chart, in step S1, at START, the adapter, which is connected to the refrigerator C at all times, is turned on. In step S2, the electric power supply to the devices not used is completely shut off by the switch on the distribution panel. At this time, the refrigerator is always connected to the network so as to renew the information of the device. Next, in step S3, when information is inputted so that the devices A, B can be started, the program proceeds to step S4, and electric power is supplied only to the devices to be used by turning on the switch on the distribution panel. In step S5, the adapter of each device, to which electric power is supplied, is set and the operation information of the device is renewed. In this case, for example, concerning the air conditioner, the temperature setting is conducted at the same time. The program proceeds to step S3 again. In the case where no information of starting the device is given in step S3 , the program proceeds to step S6, and it is judged whether or not the information of stopping the device is given. In the case where the information of stopping the device is given, the program proceeds to step S7, and electric power supply to the devices not used is shut off by the switch on the distribution panel. In the case where no information is given in step S6, the program proceeds to step S3 even when electric power supply only to the device not used is shut off by the switch on the distribution panel in step S7.

As described above, when the electric power to be supplied to an electric device, in which a continuous supply of electric power is not needed, is turned on and off by the communication conducted by the adapter body, which is connected to an electric power supply to which electric power is continuously supplied, to another adapter body to which a continuous electric power supply is not needed, the stand-by electric power of the electric device, which is classified by the necessity of supplying electric power, can be completely shut off. Therefore, for example, when a resident is going out, it is unnecessary for the resident to draw out a plug of a cord of an electric device from a socket. In the case where the resident goes out over a long period of time and the electric power supply is carelessly turned on, it is possible to prevent the leakage of electricity from an electric device, the supply of electric power to which is continued. In a restaurant or a shop, the number of lights in the time zone in which customers are not existing can be reduced as compared with the number of lights in the time zone in which customers are existing. According to the communication conducted in the network, the above countermeasures can be taken.

As described above, the electric device corresponding to a plurality of local addresses or global addresses stored in the repeater can communicate with the repeater via the adapter body connected. Alternatively, the electric device corresponding to a plurality of local addresses or global addresses stored in the repeater can communicate with the repeater via another adapter body by the wireless communication made from the connected adapter body. In the network in which a plurality of adapter bodies are arranged, according to the state of utilization of electric power, when electric power is always supplied to the adapter body for controlling an electric device, the necessity of electric power of which is high, the adapter body, which is the main adapter in communication, is used, and the electric power supply to the electric device, the necessity of electric power supply of which is low, is shut off by the distribution panel, so that the stand-by electric power can be reduced. That is, the electric circuits connected to the electric devices from the distribution panel are classified and the electric power is consumed. Due to the foregoing, by the adapter body connected to the electric power source which is continuously energized at all times, electric power supplied to the electric device, the continuous supply of electric power to which is not needed, is turned on and off through the adapter body connected to the distribution panel for supplying electric power to the electric device, the continuous supply of electric power to which is not needed.

According the information processing method of the present invention, the adapter body obtains an operation signal from the outside by the sending and receiving means such as an antenna provided in the adapter body. The information operated by the operation signal is sent to the outside. Corresponding to the cable communication system or the wireless communication system through which the information is sent and received, the operation signal and the information signal are converted by the protocol provided in the control section, and the electric device is controlled by the operation signal in the information processor. A plurality of information processors are provided so as to form the network. Further, the electric devices controlled by a plurality of adapter bodies are classified into a plurality of stages according to the necessity of electric power supply. The thus classified electric devices are controlled by the adapter bodies so that electric power can be supplied step-wise. However, like a specific device installed in a hospital, even if it is used in a specific time zone, it is not allowed to shut off the supply of electric power to the device. Accordingly, in the case of forming the network, consideration should be given to the necessity and importance of electric power supply. Further, consideration should be given to a desire of a user with respect to the priority. For example, there is a desire that only a ventilation fan is continuously driven and all other devices are stopped in the case of a cottage. Further, there is a desire that only an air conditioner having a ventilation device is driven at all times. Even when it is a plug socket to which a cord of a vacuum cleaner is connected, the plug socket to which an important device is connected must be the first stage. On the contrary, it is possible to make a selection in which although it is inconvenient, an electric device, the stoppage of electric power of which can be allowed, is the first stage.

According to the above various desires and in order to provide an effect of the shut-off of stand-by electric power, it is possible to make difference between the electric charges of electric power supplied to the electric device controlled by the adapter connected to the distribution panel for supplying electric power to the device, the continuous supply of electric power to which is not needed, and the electric charges of electric power supplied to the electric device controlled by the adapter, the supply of electric power to which is more needed. Therefore, it is possible to ask the user to introduce the system of a plurality of stages. For example, an electric power company sets the electric charges as follows. The electric charges for electric energy in the first stage are set somewhat high, and the electric charges for electric energy in the second stage are set somewhat low. That is, the electric charges for electric energy in the second stage, the use of which can be restricted, is lowered, so that electric energy can be easily increased. When the inexpensive electric charges are set so that the investment in building the network can be recovered in several years, the user can easily put this system into practical use.

However, the following may be suggested. With respect to this second stage, when the electric charges exceed a predetermined value, the contracted electric charges are raised so that the user can save electric energy. Alternatively, with respect to electric energy of this second stage, it is suggested that a peak of the consumed electric power can be cut according to a command given by the electric power company. Alternatively, at the time of changing over the electric charge contract system, the first stage and the second stage are respectively made to be 1/2 and the electrical charges are set to be same as those of the conventional electric charge system, and the electric charges in the second stage are raised and further its electric energy is decreased, so that the electric charges can be reduced. From the viewpoint of the electric power company, the following advantages can be provided. According to the contract, a peak-cut can be automatically conducted by utilizing communication. Therefore, the consumption of electric energy can be made to be uniform, and it is possible to suppress investments in unnecessary electric power facilities. From the viewpoint of the user, according to the user's own intention, the supply of electric power to an unnecessary device can be shut off anywhere, so that the electric charges can be decreased. As a result, electric energy can be saved. Accordingly, it is possible to obtain a network system contributing to the global environment protection.

As described above, according to the present invention, the electric supply port to the adapter body 1 can be provided, and when the electric power supply to the electric appliance is shut off until a command is given from the centralized controller and the terminal, the stand-by electric power of the electric appliance can be suppressed. Further, the adapter body can be made compact and the manufacturing cost can be reduced. Furthermore, the adapter body can be made to look good by using a card and slot. Only when the information processor of the present invention is attached to an electric appliance having a signal sending line and a signal receiving line and also having an electric power line, it becomes possible to use a home network. The adapter body provided in the electric power supply device such as a distribution panel may have the same structure as that of the other adapter body. Alternatively, in order to reduce the manufacturing cost, an auxiliary information obtaining means such as a camera may be omitted so that the adapter body can be made simple. Depending upon the place and position where the adapter body is used, the adapter body support table or the fixture may not be used for installing the adapter body but the adapter body may be fixed by means of adhesion or screwing.

Due to the foregoing, when a person does not use a home network, it is possible to provide such an effect that the expenses of parts coping with the network, which are incorporated into the electric appliance, can be reduced at the minimum. Since the adapter body can select various communication systems, it is possible for the adapter body to use the existing home net work. Accordingly, it is not necessary to use a centralized controller and a terminal. Therefore, the initial investment in the home network can be minimized.

Since electric power is supplied from the electric appliance to the adapter, when the adapter is used as a network camera, as long as it is an electric appliance like an air conditioner which is arranged so that it can look over the entire room, the network camera can be used without having concern about the electric power source wiring.

## Claims

1. An information processor comprising: an information obtaining means for obtaining information of an image or the like, provided in an adapter body and operated by an operation signal from an outside; a signal sending/receiving means for sending a signal of the information obtained by the information obtaining means or receiving the operation signal from the outside, arranged in the adapter body; a control section for accommodating a plurality of protocols and converting various signals so that the operation signal and the information signal, which are sent/received by the signal sending/receiving means, can be processed corresponding to various communication systems such as a cable communication system and a wireless communication system; and a support device for fixing or supporting the adapter body, wherein a position of an information obtaining section for obtaining information of the information obtaining means can be set.

2. The information processor according to claim 1, wherein the information obtaining section for obtaining the information of the information obtaining means is provided on one face of the adapter body, a fixing portion capable of fixing the adapter body on a wall face is provided on an other face of the adapter body, and the information obtaining section can be moved with respect to the fixing portion.

3. The information processor according to claim 1, wherein the plurality of adapter bodies, in which the control section is accommodated and the sending/receiving means is provided, are arranged, and the control section and the sending/receiving means can send/receive a signal to/from an other adapter body.

4. The information processor according to claim 1, 2 or 3, wherein the control section is connected to an electric device, which is arranged close to the control section, by a communication line or an electric power line through a connector.

5. The information processor according to one of claims 1 to 4, wherein an electric device corresponding to a plurality of local addresses or global addresses, which are provided in a repeater, conducts communication with the repeater through the connected adapter body or conducts communication with the repeater from the connected adapter body by wireless through an other adapter body.

6. The information processor according to one of claims 1 to 4, wherein communication is conducted with an adapter body, which is connected to an electric device that does not need a continuous electrification, through an adapter body which is connected to an electric power source that is continuously electrified, or with an adapter body, which is connected to an electric power source device for supplying electric power to the electric device that does not need the continuous electrification, and electric power supplied to the electric device that does not need the continuous electrification is controlled being turned on and off.

7. The information processor according to claim 6, wherein an adapter body, which is connected to a distribution panel for supplying electric power to the electric device that does not need the continuous electrification, turns on and off a switch on the distribution panel for supplying electric power to the electric device.

8. The information processor according to one of claims 1 to 7, wherein S/W information for controlling the information obtaining means or information obtained by the information obtaining means is stored in the control section.

9. The information processor according to one of claims 1 to 8, wherein the communication protocol accommodated in the control section of the adapter body can be changed by the communication conducted from the outside.

10. The information processor according to claim 4, further comprising an electric appliance communicating section control section, arranged in the control section, for controlling the electric device being operated by an operation signal from the outside.

11. The information processor according to one of claims 1 to 10, further comprising a control section, which is provided in the adapter body, for accommodating and processing at least three protocols with respect to protocols of HTTP (Hyper Text Transfer Protocol), STMP (Simple Mail Transfer Protocol), DNS (Domain Name System) and TCP/IP (Transmission Control Protocol/Internet/Internet Protocol), wherein a conversion can be conducted between different signals by the control section.

12. The information processor according to one of claims 1 to 11, further comprising an irradiation device, which is provided in the adapter body, for irradiating infrared rays or light which can be used for signal transmission, irradiation or illumination.

13. The information processor according to one of claims 1 to 12, wherein a housing of the adapter body is flat, circular or spherical, and a position and direction of the information obtaining section for obtaining the information of the information obtaining means provided on one face of the housing can be changed with respect to the support device.

14. The information processor according to one of claim 13, wherein a face of the housing, on which the information obtaining section is provided, is formed into a flat face, a circular face or a spherical face, and a camera lens section for obtaining image information is provided as the information obtaining section on the face.

15. An information processor comprising: a housing, on one face of which an information obtaining section of an information obtaining means, which is operated by an operation signal sent from an outside and obtains information of an image or the like, is provided; and a sending/receiving means, which is provided in the housing, for sending an obtained information signal to the outside or receiving an operation signal from the outside, the sending and receiving means being capable of corresponding to various communication system such as a cable communication system and a wireless communication system, wherein at least one portion of the housing is formed into a flat shape, a circular shape or a spherical shape, and one face or a support face of the housing for supporting the housing is formed into a flat face, a circular face, or a spherical shape.

16. The information processor according to claim 15, wherein an other face of the casing different from the front face on which the information obtaining section is provided is made to be a fixing portion capable of being fixed onto a wall face, and the information obtaining section is made so that a position and direction of the information obtaining section can be changed with respect to the fixing portion.

17. An information processor comprising: a sensor device arranged in the adapter body, for detecting a plurality of pieces of different information such as a temperature; a signal sending/receiving means arranged in the adapter body, for sending a signal of information detected by the sensor device or receiving a signal sent from the outside; and a control section for accommodating a plurality of protocols and conducting a signal conversion so that the signal can be processed corresponding to various communication systems, such as a cable communication system and a wireless communication system, conducting communication by the signal sending/receiving means, wherein a plurality of adapter bodies, in which the sensor device and the control section are provided, are arranged, and based on a plurality of pieces of information detected by the plurality of sensors by sending/receiving between the plurality of adapter bodies, an environment state, in which the plurality of adapters are arranged, is judged.

18. The information processor according to one of claims 1 to 17, wherein the adapter body includes a speaker for transmitting voice information sent from the outside.

19. An information processor comprising: a signal sending and receiving means, which is provided in an adapter body, for obtaining an operation signal from an outside and sending information, which is operated by the operation signal, to the outside; a control section for accommodating a protocol capable of processing the operation signal and the information signal corresponding to various communication systems such as a cable communication system and a wireless communication system, in which the signal is sent/received by the signal sending/receiving means, and for converting various signals; and a device communication section controlling section, which is arranged in the control section, for controlling an electrical device being operated by an operation signal from the outside, wherein communication is conducted to control turning on and off the electric power supplied to an electric device, that does not need a continuous electrification, from an adapter body connected to an electric power device continuously electrificated of the plurality of adapter bodies to an other adapter body connected to an electric device, which does not need a continuous electrification, or connected to an electric power supply for supplying electric power to the electric device.

20. An information processing method comprising: a network forming step of forming a network of communication by providing a plurality of information processors including a signal sending/receiving means for obtaining an operation signal from an outside and sending information, which is operated by the operation signal, to the outside, provided in an adapter body, a control section for accommodating a protocol capable of processing an operation signal and an information signal corresponding to a communication systems such as a cable communication system and a wireless communication system, in which the signal is sent/received by the signal sending/receiving means, and for converting the signal, and a device communication section controlling section controlling section, which is arranged in the control section, for controlling an electrical device being operated by an operation signal from the outside; a classification step for classifying an electrical device, which is controlled by a plurality of adapter bodies, into a plurality of stages according to necessity of supplying electric power; and a switching step for conducting a communication through an adapter body controlling an electric device which needs more electric power, of adapter bodies controlling the classified electric device, to an adapter body controlling an electric device which needs less electric power or to an adapter body controlling an electric power supply unit for supplying electric power to the electric device, thereby turning on and off the power supply to the electric device.

21. The information processing method according to claim 20, wherein an electric charges of electric power supplied to an electric device, which does not need a continuous electrification, is different from an electric charges of electric power supplied to an electric device which needs more electric power.
